# EUROPEAN PATENT APPLICATION

(11) **EP 1 424 465 A1**
(43) Date of publication of application: **02.06.2004**
(21) Application number: 02797708.1
(22) Date of filing: 29.08.2002
(51) Int. Cl.: F01D 5/02, F02C 7/00

(54) **HYBRID ROTOR, METHOD OF MANUFACTURING THE HYBRID ROTOR, AND GAS TURBINE**

(30) Priority: 03.09.2001 JP 2001265583
(71) Applicant: Mitsubishi Heavy Industries, Ltd., Tokyo 100-8315 (JP)
(72) Inventor: YAMADA, Takeshi, Mitsubishi Heavy Industries, Ltd., Nagoya-shi, Aichi 455-8151 (JP)
(74) Representative: Henkel, Feiler & Hänzel
(86) International application number: PCT/JP2002/008716
(87) International publication number: WO 2003/021083

(57) **Abstract**

A hybrid rotor, a manufacturing method thereof and a gas turbine realize reduced manufacturing cost and reduced weight of parts. An impeller part 31 as a rotor main part comprises a bore portion 32, impellers 34 provided therearound and a shaft bore 33 provided centrally of the bore portion 32. An enlarged shaft bore portion 35 is coaxially provided in the shaft bore 33. The impeller part 31 is made of Ti or Ni alloy by precision casting. A ring member 10 made of a metal base composite material is inserted into the enlarged shaft bore portion 35 and is bonded together by friction bonding or diffusion bonding to thereby strengthen the rotor. The rotor main part is manufactured by precision casting without need of machining. The ring member 10 is separately manufactured from the impeller part 11. By strengthening the rotor, the bore portion 32 can be made thin. Thus, manufacturing cost is remarkably reduced and weight of the rotor is also reduced.

## Description

### TECHNICAL FIELD

The present invention relates to a hybrid rotor, a manufacturing method thereof and a gas turbine, in which a rotor of a gas turbine, supercharger or the like is manufactured by precision casting as well as by friction bonding or diffusion bonding, thereby realizing an enhanced strength, reduced weight and reduced manufacturing cost of the rotor.

### BACKGROUND OF THE INVENTION

In the conventional gas turbine, supercharger or the like, a rotor comprising such main parts as an impeller, bladed disk, bladed ring, etc. is manufactured such that a forged material, made of a heat resistant material of Ti or Ni base alloy, etc. is cut by machining by a five spindle NC lathe, for example.

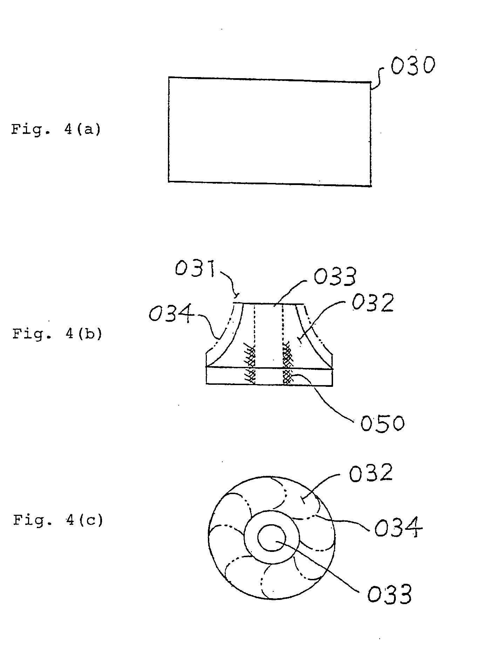

Figs. 4(a) to (c) are explanatory views showing an example of a prior art rotor part, wherein Fig. 4(a) is a side view of a forged material as a material of the rotor part, Fig. 4(b) is a side view of an impeller part of the rotor part and Fig. 4(c) is a plan view of the impeller part of Fig. 4(b).

In Fig. 4(a), numeral 030 designates an columnar forged material of Ti alloy. This forged material 030 is set on a five spindle NC lathe, for example, and an impeller part 031 as a rotor portion is manufactured by cutting by the machine. The impeller part 031 is formed in a shape having a curved surface and comprises a bore portion 032, a shaft bore 033 provided along the axis of the bore portion 032 and a plurality of impellers 034 provided around the bore portion 032. A tip of each of the impellers 034 is formed in a thin shape having a thickness of about 0.7 mm. On the other hand, the bore portion 032 is formed in a thick shape so as to ensure a strength of an area 050 around the shaft bore 033. Thus, for the machining of the impeller part 031 having such a complicated shape, a lot of machining hours are required.

The impeller part 031 as the rotor portion has a size of an outer diameter of about 200 to 300 mm and has a heavy weight for ensuring the strength of the area 050 of the bore portion 032. If the impeller part 031 is to be made by casting, there is a large cooling rate difference between the thick portion of the bore portion 032 and the thin portion of the impellers 034 so that a compatibility of both of the shape forming and the strength ensuring becomes difficult. Hence, the manufacture of the impeller part 031 is done at present by cutting by a machine.

The Japanese laid-open patent application No. 1999-343858 discloses a compressor impeller manufacturing method in which a compressor impeller of a turbocharger supercharging an automobile or marine engine is made of a cast aluminum alloy having a good castability and is formed such that a main body thereof is formed by die casting, low pressure casting or the like and a high stress portion near the rotational center is reinforced by a reinforcement made of an aluminum base composite material. There, a conically shaped cavity is cut in the portion to be reinforced of the main body, a reinforcing member of a complementary conical shape is separately made of an aluminum base composite material and this reinforcing member is press-fitted so that the cavity and the reinforcing member are integrally combined by friction bonding to thereby form the compressor impeller of a turbocharger.

The reinforcing member is formed such that a preform of the reinforcement made by a 25% aluminum borate whisker, for example, is inserted into the cavity and, by a gas pressure penetration method, etc. an aluminum alloy is filled by pressure.

As mentioned above, because the impeller part 031 as a rotor portion has the complicated shape, there is a large size difference between the thick portion and the thin portion and forming thereof by casting can give no sufficient strength. Thus, the manufacture of the impeller part 031 is done at present by machining. In order to manufacture the impellers 034 and the like by machining, several hundreds of hours are required because of the complicated shape, thereby inviting a very high cost of the manufacture. Also, in the bore portion 032, there is caused a very high stress in the circumferential direction and especially a strength condition is very severe in the portion of the area 050 of the shaft bore 033. This requires the bore portion 032 being made thick to become a very heavy part.

The impeller part mentioned in the Japanese laid-open patent application No. 1999-343858 is made of the aluminum alloy, that stands at most about 200°C. This impeller part is presumed to be used in the environment in which the temperature is not very high, for example, on the compressor side, for example, that compresses air in a single stage. Also, while the reinforcing member is formed by the reinforcement preform that is inserted into the cavity and is applied with the gas pressure penetrating method by which the aluminum alloy is filled by pressure, this gas pressure penetrating method, being also called a molten metal penetrating method, is mainly such a method that enables to form a composite material of a short fiber reinforcing type. Thus, by this method, no long fiber reinforcing type composite material can be formed and, moreover, no circumferential directional orientation of the reinforcing fiber can be realized.

Hence, it is an object of the present invention to provide a hybrid rotor, a manufacturing method of this rotor and a gas turbine comprising this rotor, in which a rotor main part comprising an impeller, bladed disk, bladed ring, etc. is manufactured by precision casting, the part existing in a severe stress environment is manufactured by a ring member made of a metal base composite material and these two parts are combined to be bonded by friction bonding or diffusion bonding to form the rotor, thereby realizing a reduced manufacturing cost and reduced weight of the rotor.

### DISCLOSURE OF THE INVENTION

In order to achieve the abovementioned object, the present invention provides the methods and devices of the following (1) to (12):
(1) A manufacturing method of a hybrid rotor comprising a rotor part having a shaft bore into which a rotating shaft is inserted to be fitted and a plurality of impellers provided around an outer periphery of the rotor part, characterized in comprising the steps of; manufacturing the rotor part by precision casting in such a form that the shaft bore has an enlarged shaft bore portion in which a diameter of the shaft bore is enlarged with a predetermined width in the shaft radial direction and which has a predetermined length in the shaft axial direction; inserting a ring member made of a metal base composite material into the enlarged shaft bore portion formed by the precision casting, the ring member having an outer diameter and a length substantially same as a diameter and the length, respectively, of the enlarged shaft bore portion and having an inner diameter substantially same as the diameter of the shaft bore; and bonding the ring member to the enlarged shaft bore portion by friction bonding or diffusion bonding so that the hybrid rotor is integrally formed.
   According to the present method, the rotor part having the enlarged shaft bore portion is manufactured by precision casting. Then, the ring member, made of the metal base composite material, is inserted into the enlarged shaft bore portion formed by the precision casting and is integrally bonded to the enlarged shaft bore portion by friction bonding or diffusion bonding. Hence, the rotor part as the rotor main part comprising complicated curved surface portions including impeller profile portions can be manufactured by the precision casting without need of machining. Also, the enlarged shaft bore portion is provided in the bore inner diameter portion where the stress environment is severe and is inserted with the ring member made of the metal base composite material of a high strength to be bonded together by the friction bonding or diffusion bonding. Thereby, the strength of the rotor is ensured and the manufacturing cost of the rotor can be remarkably reduced.
(2) A manufacturing method of a hybrid rotor comprising a rotor disk having an inner bore and forming a ring structure of a rotor in which the rotor disk is supported by front and rear rotor disks or by other rotor parts and having a plurality of blades provided around an outer periphery of the rotor disk, characterized in comprising the steps of; manufacturing the rotor disk by precision casting in such a form that the inner bore has an enlarged inner bore portion in which a diameter of the inner bore is enlarged with a predetermined width in the bore radial direction and which has a predetermined length in the bore axial direction; inserting a ring member made of a metal base composite material into the enlarged inner bore portion formed by the precision casting, the ring member having an outer diameter and a length substantially same as a diameter and the length, respectively, of the enlarged inner bore portion and having an inner diameter substantially same as the diameter of the inner bore; and bonding the ring member to the enlarged inner bore portion by friction bonding or diffusion bonding so that the hybrid rotor is integrally formed.
   According to the present method, the rotor disk having the enlarged inner bore portion is manufactured by precision casting. Then, the ring member, made of the metal base composite material, is inserted into the enlarged inner bore portion formed by the precision casting and is integrally bonded to the enlarged inner bore portion by friction bonding or diffusion bonding. Hence, the rotor disk as the rotor main part comprising complicated curved surface portions including blade profile portions can be manufactured by the precision casting without need of machining. Also, the enlarged inner bore portion is provided in the bore inner diameter portion where the stress environment is severe and is inserted with the ring member made of the metal base composite material of a high strength to be bonded together by the friction bonding or diffusion bonding. Thereby, the strength of the rotor is ensured and the manufacturing cost of the rotor can be remarkably reduced.
(3) A manufacturing method of a hybrid rotor as mentioned in (1) or (2) above, characterized in that the ring member is made of a material different from the material of the rotor part or rotor disk.
   According to the present method, in addition to the effect obtained by the method of (1) or (2) above, the ring member, being made of the material different from that of the rotor part or rotor disk, can be easily bonded to the rotor part or rotor disk, especially in case of the friction bonding. Thereby, selection of the material of the ring member, that is used for strengthening the rotor part or rotor disk, can be broadened and an appropriate material can be used as the strengthening member.
(4) A manufacturing method of a hybrid rotor as mentioned in any one of (1) to (3) above, characterized in that the ring member is formed by a metal base composite material in which long fibers as reinforcing fibers are oriented in the circumferential direction of the ring member.
   According to the present method, in addition to the effect obtained by the method of any one of (1) to (3) above, the ring member is made of the composite material in which the reinforcing fibers of the long fibers are oriented in the circumferential direction of the ring member. Thereby, a sufficient strength is obtained, the bore portion can be thinned and the weight of the rotor itself as the hybrid rotor can be reduced.
(5) A manufacturing method of a hybrid rotor as mentioned in any one of (1) to (4) above, characterized in that the ring member is made of a Ti base composite material.
   According to the present method, in addition to the effect obtained by any one of (1) to (4) above, the ring member, being made of the Ti base composite material, has a sufficient heat resistance and the weight of the hybrid rotor can be reduced.
(6) A hybrid rotor comprising a rotor part having a shaft bore into which a rotating shaft is inserted to be fitted and a plurality of impellers provided around an outer periphery of the rotor part, characterized in that the rotor part is manufactured by precision casting in such a form that the shaft bore has an enlarged shaft bore portion in which a diameter of the shaft bore is enlarged with a predetermined width in the shaft radial direction and which has a predetermined length in the shaft axial direction and a ring member made of a metal base composite material, the ring member having an outer diameter and a length substantially same as a diameter and the length, respectively, of the enlarged shaft bore portion and having an inner diameter substantially same as the diameter of the shaft bore, is bonded to the enlarged shaft bore portion by friction bonding or diffusion bonding so that the hybrid rotor is integrally formed.
   According to the present device, the effect same as that obtained by the above method (1) can be obtained.
(7) A hybrid rotor comprising a rotor disk having an inner bore and forming a ring structure of a rotor in which the rotor disk is supported by front and rear rotor disks or by other rotor parts and having a plurality of blades provided around an outer periphery of the rotor disk, characterized in that the rotor disk is manufactured by precision casting in such a form that the inner bore has an enlarged inner bore portion in which a diameter of the inner bore is enlarged with a predetermined width in the bore radial direction and which has a predetermined length in the bore axial direction and a ring member made of a metal base composite material, the ring member having an outer diameter and a length substantially same as a diameter and the length, respectively, of the enlarged inner bore portion and having an inner diameter substantially same as the diameter of the inner bore, is bonded to the enlarged inner bore portion by friction bonding or diffusion bonding so that the hybrid rotor is integrally formed.
   According to the present device, the effect same as that obtained by the above method (2) can be obtained.
(8) A hybrid rotor as mentioned in (6) or (7) above, characterized in that the ring member is formed by a metal base composite material in which long fibers as reinforcing fibers are oriented in the circumferential direction of the ring member.
   According to the present device, in addition to the effect obtained by the device of (6) or (7) above, the ring member is made of the composite material in which the reinforcing fibers of the long fibers are oriented in the circumferential direction of the ring member. Thereby, a sufficient strength is obtained, the bore portion can be thinned and the weight of the rotor itself as the hybrid rotor can be reduced.
(9) A hybrid rotor as mentioned in any one of (6) to (8) above, characterized in that the ring member is made of a Ti base composite material.
   According to the present device, in addition to the effect obtained by any one of (6) to (8) above, the ring member, being made of the Ti base composite material, has a sufficient heat resistance and the weight of the hybrid rotor can be reduced.
(10) A gas turbine comprising a hybrid rotor as mentioned in (7) above.
   According to the present device, the gas turbine has the effect mentioned in (7) above.
(11) A gas turbine as mentioned in (10) above, characterized in that the ring member is formed by a metal base composite material in which long fibers as reinforcing fibers are oriented in the circumferential direction of the ring member.
   According to the present device, the gas turbine has the effect mentioned in (8) above.
(12) A gas turbine as mentioned in (10) or (11) above, characterized in that the ring member is made of a Ti base composite material.
   According to the present device, the gas turbine has the effect mentioned in (9) above.

### BRIEF DESCRIPTION OF THE DRAWINGS

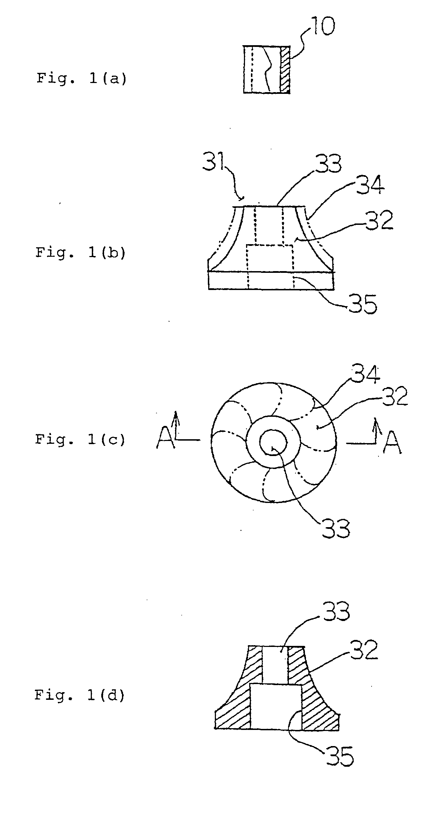

Figs. 1(a) to (d) are explanatory views showing a first embodiment of a hybrid rotor according to the present invention, wherein Fig. 1(a) is a partially cut out side view of a ring member, Fig. 1(b) is a side view of an impeller part, Fig. 1(c) is a plan view of the impeller part of Fig. 1(b) and Fig. 1(d) is a cross sectional view taken on line A-A of Fig. 1(c).

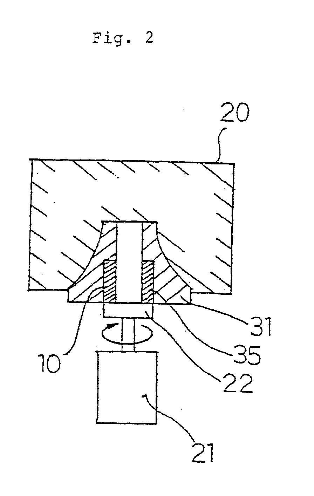

Fig. 2 is an explanatory view showing a manufacturing mode of the hybrid rotor of the first embodiment of Fig. 1.

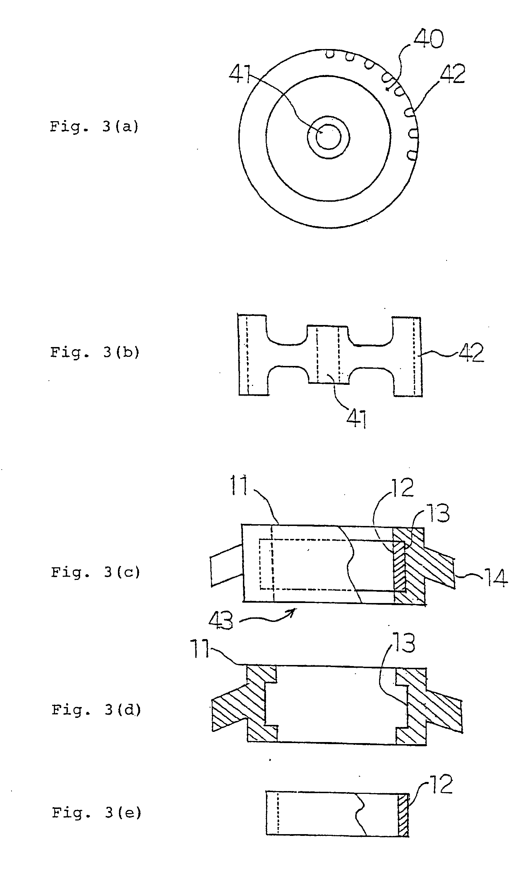

Figs. 3(a) to (e) are explanatory views showing a second embodiment of a hybrid rotor according to the present invention, wherein Fig. 3(a) is a plan view of a prior art rotor disk of a turbine, compressor or the like for a comparison purpose, Fig. 3(b) is a side view of the rotor disk of Fig. 3(a), Fig. 3(c) is a partially cut out side view of a bladed ring as a rotor disk of the hybrid rotor of the present invention, Fig. 3(d) is a cross sectional view of a bladed ring part of the bladed ring of Fig. 3(c) and Fig. 3(e) is a partially cut out side view of a ring member of the bladed ring of Fig. 3(c).
Figs. 4(a) to (c) are explanatory views showing an example of a prior art rotor part, wherein Fig. 4(a) is a side view of a forged material of the rotor part, Fig. (b) is a side view of an impeller part of the rotor part and Fig. 4(c) is a plan view of the impeller part of Fig. 4(b).

### BEST MODE FOR CARRYING OUT THE INVENTION

Herebelow, the invention will be described more concretely based on embodiments according to the present invention with reference to the appended figures.

Figs. 1(a) to (d) are explanatory views showing a first embodiment according to the present invention, wherein Fig. 1(a) is a partially cut out side view of a ring member made of a metal base composite material, Fig. 1(b) is a side view of an impeller part as a rotor main part, Fig. 1(c) is a plan view of the impeller part of Fig. 1(b) and Fig. 1(d) is a cross sectional view taken on line A-A of Fig. 1(c).

In Figs. 1(a) and (b), numeral 10 designates the ring member as a portion of the hybrid rotor according to the present invention, numeral 33 designates a shaft bore and numeral 31 designates the impeller part , that is formed in the same outer shape as the impeller part shown in Fig. 4(b). The ring member 10 is a cylindrical member made of a Ti base or Ni base composite material, having a predetermined width of a ring wall and having an inner diameter same as a diameter of the shaft bore 33. This ring member 10 is manufactured in advance separately from the impeller part 31 as a portion of the hybrid rotor.

One of the manufacturing methods of this composite material ring member is disclosed in the Japanese laid-open patent application No. 2000-263697 of the same applicant here, in which a plurality of reinforcing fibers, arranged substantially in parallel, are interposed between each of a plurality of metal foils and these metal foils together with the reinforcing fibers are hot-rolled in vacuum to thereby form a tape-shaped preform. This tape-shaped preform is wound while being pressed by a predetermined force to thereby form a roll-shaped preform. This roll-shaped preform is applied with the hot isostatic pressing (HIP) process so that a composite material ring is obtained. By such manufacturing method, the reinforcing fibers can be oriented in the circumferential direction of the ring member and the strength can be enhanced.

In Fig. 1(b), the impeller part 31 comprises a bore portion 32, a shaft bore 33 provided along the central axis of the bore portion 32, an enlarged shaft bore portion 35 provided coaxially with the shaft bore 33 in the lower part in the figure of the bore portion 32, and a plurality of the impellers provided around the bore portion 32. A rotating shaft (not shown) is inserted into the shaft bore to be fitted. The impeller part 31 as a rotor main part, having such complicated shape including the impellers 34, can be profiled by precision casting without need of machining. Thus, the manufacturing time is shortened and the manufacturing cost can be remarkably reduced. The impeller part 31 is made of a heat resistant material by precision casting and the ring member 10 is made of a composite material of a heat resistant material same as the impeller part 31 or different therefrom.

In Fig. 1(d), the shaft bore 33 and the enlarged shaft bore portion 35 are provided within the impeller part 31. The enlarged shaft bore portion 35 is the bore portion into which the ring member 10 shown in Fig. 1(a) is inserted to be integrated together by friction bonding, as will be described below.

As the impeller part 31 is manufactured by precision casting, the strength within the impeller part 31 becomes unavoidably insufficient. Thus, the ring member 10 is integrally bonded to the enlarged shaft bore portion 35 for reinforcing the portion of the impeller part 31 where the stress environment is severe. The ring member 10 is formed as a reinforcing ring made of a Ti base or Ni base composite material in which the reinforcing fibers are oriented in the circumferential direction of the ring member 10. By reinforcing the impeller part 31 using the ring member 10 made of the metal base composite material, the weight of the impeller part 31 can be remarkably reduced.

As a base metal of the metal base composite material, Ti, Ni, Cu or the like, being a heat resistant material, is used. If an application to a gas turbine rotor is considered, Ti alloy or Ni alloy is actually selected. If light weight is needed for an aero-gas turbine, etc., Ti alloy is preferably used (Specific gravity of Ti is 4.5 g/cc and that of Ni is 8 g/cc).

As the reinforcing material, (1) if a particulate material is taken, carbon, silicon carbide, titanium carbide, titanium boride, alumina, copper oxide or the like is used, (2) if a short fiber (whisker) is taken, the above material (1) is also used and (3) if a long fiber is taken, carbon fiber, silicon carbide fiber, alumina fiber or the like is used.

As the ring member 10 of the present first embodiment, such reinforcing material made by the long fiber as mentioned in (3) above is used in which the fibers are oriented in the circumferential direction.

Fig. 2 is an explanatory view showing a manufacturing mode of the hybrid rotor of the present first embodiment according to the present invention, in which an example where the ring member 10 made of the metal base composite material is bonded to the impeller part 31 by friction bonding. The impeller part 31 is fixedly fitted to a fitting jig 20 and the ring member 10 is inserted into the enlarged shaft bore portion 35. The ring member 10 at its back side is fixedly supported by a supporting member 22 that is connected to a drive shaft of a motor 21. Then, the ring member 10 is rotated by the motor 21 in a predetermined speed of rotation thereby to be integrally bonded to the inner wall of the enlarged shaft bore portion 35 by friction bonding.

The friction bonding enables an easy bonding of the materials to be bonded even if they are different materials from each other, is suitable for bonding relatively small parts and realizes a high bonding strength. Also, there is no need of further strengthening the bonded portion. Thus, in the present embodiment, the impeller part 31 can be sufficiently strengthened by the ring member 10 of the different material and a selection of the material is broadened. Thereby, the manufacturing cost is reduced and the weight of the impeller part 31 itself also can be reduced.

On the other hand, bonding by diffusion is suitable for relatively large parts. In the present invention, the diffusion bonding is done such that a rotor comprising a rotor part like the impeller part 31, a rotor disk or the like that is manufactured by precision casting is provided with an enlarged inner bore portion and a ring member made of a metal base composite material is inserted. In order to do the bonding in vacuum, the connection portion appearing on the outer surface of the bonding portion is bonded by electron-beam welding, etc. Then, the HIP process or the like is carried out and the bonding portion is integrally bonded by the diffusion bonding. The HIP process is generally used as a post-treatment for making up internal defects in a product made by precision casting to thereby enhance the quality. In the present invention, this post-treatment and the bonding treatment of the ring member can be done at the same time by the HIP process.

Figs. 3(a) to (e) are explanatory views showing a second embodiment of a hybrid rotor according to the present invention, wherein Fig. 3(a) is a plan view of a prior art rotor disk of a turbine, compressor or the like for a comparison purpose, Fig. 3(b) is a side view of the rotor disk of Fig. 3(a), Fig. 3(c) is a partially cut out side view of a bladed ring as a rotor disk of the hybrid rotor of the present invention, Fig. 3(d) is a cross sectional view of a bladed ring part of the bladed ring of Fig. 3(c) and Fig. 3(e) is a partially cut out side view of a ring member of the bladed ring of Fig. 3(c).

In Figs. 3(a) and (b), a conventional rotor disk 40 is formed in a disk shape having complicated curved surface portions and is provided in its outer peripheral portion with a plurality of blade fitting grooves 42 so that a plurality of blades, not shown, are fitted therein. For fitting the plurality of blades, the outer peripheral portion of the disk 40 is formed thick so as to be strengthened. In the central portion of the disk 40, a shaft bore 41 is provided.

Fig. 3(c) shows a bladed ring 43 as a rotor disk of the hybrid rotor of the present invention comprising a bladed ring part 11 and a ring member 13 made of a metal base composite material. This bladed ring 43 is made as an improvement of the conventional disk that constitutes a turbine rotor or compressor rotor made in a usual disk and blade assembly structure. The bladed ring 43 is formed in a ring shape so as to form the hybrid rotor of the present invention of a ring structure. Fig. 3(d) shows the bladed ring part 11 and an enlarged inner bore portion 13 in which an inner diameter of an inner wall portion of the bladed ring part 11 is enlarged with a predetermined width in the bore radial direction and a predetermined length in the bore axial direction. The bladed ring part 11 is also formed in a ring shape body made of a heat resistant alloy by precision casting and has a plurality of blades 14 provided on its outer periphery.

The ring member 12, made of a metal base composite material and reinforced by reinforcing fibers arranged in the circumferential direction like in the ring member 10 of the first embodiment, is inserted into the enlarged inner bore portion to be bonded together by friction bonding or diffusion bonding, like in the first embodiment. The cross sectional shape of the ring wall of the ring member 12 is complementary with the cross sectional shape of the enlarged portion of the enlarged inner bore portion 13.

The bladed ring 43 as the hybrid rotor of the present second embodiment is manufactured such that the bladed ring part 11 made of a heat resistant material and the ring member 12 made of a composite material of a heat resistant material same as the bladed ring part 11 or different therefrom are integrally bonded together by friction bonding or diffusion bonding, like in the hybrid rotor of the first embodiment comprising the impeller part 31 and the ring member 10.

The bladed ring part 11 is manufactured as an integral part by precision casting without need of machining of the complicated blade curved surface as in the conventional case. The ring member 12 is manufactured in advance separately and is bonded to the bladed ring part 11 by friction bonding or diffusion bonding. Thus, the manufacturing cost is reduced and the weight of the bladed ring 11 also can be reduced.

The bladed ring 43 shown in Figs. 3(c) to (e) as the hybrid rotor of the present invention is mainly used as a gas turbine rotor, in which the bladed ring 43 is not directly connected to a rotating shaft but is used being supported by front and rear disks or other rotor parts so as to form a disk assembly structure of the ring shape.

In the above, while the invention has been described based on the examples of the hybrid rotor of the first embodiment comprising the impeller part 31 and of the second embodiment comprising the bladed ring part 11 as mainly applicable to a gas turbine, the hybrid rotor of the present invention and the manufacturing method thereof are applicable to a turbine, compressor, supercharger or the like.

In the present invention, all the main portions of the rotor, such as the impeller part, disk, bladed disk, etc. can be manufactured by precision casting and the ring member made of the metal base composite material can be bonded by friction bonding or diffusion bonding to the portion where the stress environment is severe to thereby form the hybrid rotor. Thus, the compatibility of the cost reduction and the weight reduction of the parts can be realized. Especially, if the hybrid rotor is used in a gas turbine, a remarkable effect can be obtained.

### INDUSTRIAL APPLICABILITY

According to the present invention, the rotor part or rotor disk constituting the hybrid rotor comprising the complicated curved surface portions including the impeller or blade portions can be manufactured by precision casting without need of machining. Then, the ring member, made of the metal base composite material, is inserted into the enlarged shaft bore portion or inner bore portion formed by the precision casting and is integrally bonded together by friction bonding or diffusion bonding. Thereby, the strength of the rotor is ensured and the manufacturing cost of the rotor can be remarkably reduced.

Moreover, by selecting the material of the ring member differently from the material of the rotor part or rotor disk, bonding by the friction bonding can be done easily. Thus, selection of the material of the ring member for strengthening the rotor is broadened and an appropriate material can be used.

Also, if the ring member is formed by the composite material in which the reinforcing fibers are oriented in the circumferential direction of the ring member, then the strength of the rotor is enhanced and the weight of the rotor itself can be reduced.

Also, the ring member made of a Ti base composite material has a sufficient heat resistance and the weight of the rotor can also be reduced.

## Claims

1. A manufacturing method of a hybrid rotor comprising a rotor part having a shaft bore into which a rotating shaft is inserted to be fitted and a plurality of impellers provided around an outer periphery of said rotor part, **characterized in** comprising the steps of; manufacturing said rotor part by precision casting in such a form that said shaft bore has an enlarged shaft bore portion in which a diameter of said shaft bore is enlarged with a predetermined width in the shaft radial direction and which has a predetermined length in the shaft axial direction; inserting a ring member made of a metal base composite material into said enlarged shaft bore portion formed by said precision casting, said ring member having an outer diameter and a length substantially same as a diameter and the length, respectively, of said enlarged shaft bore portion and having an inner diameter substantially same as the diameter of said shaft bore; and bonding said ring member to said enlarged shaft bore portion by friction bonding or diffusion bonding so that said hybrid rotor is integrally formed.

2. A manufacturing method of a hybrid rotor comprising a rotor disk having an inner bore and forming a ring structure of a rotor in which said rotor disk is supported by front and rear rotor disks or by other rotor parts and having a plurality of blades provided around an outer periphery of said rotor disk, **characterized in** comprising the steps of; manufacturing said rotor disk by precision casting in such a form that said inner bore has an enlarged inner bore portion in which a diameter of said inner bore is enlarged with a predetermined width in the bore radial direction and which has a predetermined length in the bore axial direction; inserting a ring member made of a metal base composite material into said enlarged inner bore portion formed by said precision casting, said ring member having an outer diameter and a length substantially same as a diameter and the length, respectively, of said enlarged inner bore portion and having an inner diameter substantially same as the diameter of said inner bore; and bonding said ring member to said enlarged inner bore portion by friction bonding or diffusion bonding so that said hybrid rotor is integrally formed.

3. A manufacturing method of a hybrid rotor as claimed in Claim 1 or 2, **characterized in that** said ring member is made of a material different from the material of said rotor part or rotor disk.

4. A manufacturing method of a hybrid rotor as claimed in any one of Claims 1 to 3, **characterized in that** said ring member is formed by a metal base composite material in which long fibers as reinforcing fibers are oriented in the circumferential direction of said ring member.

5. A manufacturing method of a hybrid rotor as claimed in any one of Claims 1 to 4, **characterized in that** said ring member is made of a Ti base composite material.

6. A hybrid rotor comprising a rotor part having a shaft bore into which a rotating shaft is inserted to be fitted and a plurality of impellers provided around an outer periphery of said rotor part, **characterized in that** said rotor part is manufactured by precision casting in such a form that said shaft bore has an enlarged shaft bore portion in which a diameter of said shaft bore is enlarged with a predetermined width in the shaft radial direction and which has a predetermined length in the shaft axial direction and a ring member made of a metal base composite material, said ring member having an outer diameter and a length substantially same as a diameter and the length, respectively, of said enlarged shaft bore portion and having an inner diameter substantially same as the diameter of said shaft bore, is bonded to said enlarged shaft bore portion by friction bonding or diffusion bonding so that said hybrid rotor is integrally formed.

7. A hybrid rotor comprising a rotor disk having an inner bore and forming a ring structure of a rotor in which said rotor disk is supported by front and rear rotor disks or by other rotor parts and having a plurality of blades provided around an outer periphery of said rotor disk, **characterized in that** said rotor disk is manufactured by precision casting in such a form that said inner bore has an enlarged inner bore portion in which a diameter of said inner bore is enlarged with a predetermined width in the bore radial direction and which has a predetermined length in the bore axial direction and a ring member made of a metal base composite material, said ring member having an outer diameter and a length substantially same as a diameter and the length, respectively, of said enlarged inner bore portion and having an inner diameter substantially same as the diameter of said inner bore, is bonded to said enlarged inner bore portion by friction bonding or diffusion bonding so that said hybrid rotor is integrally formed.

8. A hybrid rotor as claimed in Claim 6 or 7, **characterized in that** said ring member is formed by a metal base composite material in which long fibers as reinforcing fibers are oriented in the circumferential direction of said ring member.

9. A hybrid rotor as claimed in any one of Claims 6 to 8, **characterized in that** said ring member is made of a Ti base composite material.

10. A gas turbine comprising a hybrid rotor as claimed in Claim 7.

11. A gas turbine as claimed in Claim 10, **characterized in that** said ring member is formed by a metal base composite material in which long fibers as reinforcing fibers are oriented in the circumferential direction of said ring member.

12. A gas turbine as claimed in Claim 10 or 11, **characterized in that** said ring member is made of a Ti base composite material.
